Europäisches Patentamt

(19) European Patent Office

Office européen des brevets

(11) Numéro de publication: **0 226 805**
**A1**

(12) **DEMANDE DE BREVET EUROPEEN**

(21) Numéro de dépôt: **86115794.9**

(22) Date de dépôt: **13.11.86**

(51) Int. Cl.⁴: **G 02 B 6/44**

(30) Priorité: **18.11.85 FR 8516993**

(43) Date de publication de la demande:
**01.07.87 Bulletin 87/27**

(84) Etats contractants désignés:
**BE DE FR GB IT LU NL SE**

(71) Demandeur: **ALCATEL CIT**
**33, rue Emeriau**
**F-75015 Paris(FR)**

(72) Inventeur: **Blanchet, Pierre**
**10bis avenue Raymond Poincaré**
**F-94290 Villeneuve Le Roi(FR)**

(72) Inventeur: **Renaudin, Christian**
**29 Les Avelines**
**F-91940 Les Ulis(FR)**

(74) Mandataire: **Weinmiller, Jürgen et al,**
**Lennéstrasse 9 Postfach 24**
**D-8133 Feldafing(DE)**

(54) **Chassis de tête de cables optiques.**

㊿ Le châssis comprend une partie arrière (1) fixée sur des montants de bâti (15) et une partie avant (2) articulée sur la partie arrière; cette partie arrière (1) est équipée de moyens (27, 30-31, 28) assurant le traitement des éléments constitutifs du câble qu'elle reçoit, pour leur distribution vers la partie avant, sous forme de fibres individuelles, et en dehors du châssis; la partie avant porte des centreurs optiques (60) de raccordement entre les fibres recçues de la partie arrière et des éléments de liaison avec des équipements optoélectroniques, montés dans la partie avant pour assurer une transmission de flux lumineux parallèlement à sa face avant.

EP 0 226 805 A1

./...

Croydon Printing Company Ltd.

FIG. 2

Châssis de tête de câbles optiques

La présente invention concerne les sytèmes de transmission par fibres optiques et, en particulier, dans ces systèmes, des châssis dans lesquels sont traitées les fibres optiques individuelles d'un câble optique, en vue de leur raccordement à des équipements opto-électroniques.

A l'arrivée dans les stations de télécommunications, chacun des câbles de ligne à fibres optiques est acheminé dans des chemins de câbles jusqu'au droit d'un bâti où il doit être traité. Le câble est éclaté à l'entrée d'un dispositif dit de tête de câble optique, disposé dans le bâti. Dans ce dispositif, chaque fibre du câble, traitée individuellement, est dirigée via deux demi-connecteurs vers l'équipement opto-électronique devant la recevoir. A la sortie de ces équipements, chacune des fibres d'un câble repart en ligne via deux autres demi-connecteurs.

Le dispositif de tête de câble optique se présente en général sous la forme d'une simple platine, qui est montée en haut du bâti. Cette platine porte des supports de connecteurs optiques, dits centreurs pour deux demi-connecteurs optiques. Les centreurs sont montés transversalement à la platine et sont aptes à recevoir depuis l'une et l'autre des faces de la platine les deux demi-connecteurs précités, respectivement.

Pour réaliser la fonction de distribution entre les fibres optiques d'un câble de ligne et les équipements opto-électroniques du bâti à travers le dispositif de tête de câble, le câble de ligne est éclaté au niveau du dispositif de tête de câble, en ses fibres individuelles. Les fibres individuelles, sur lesquelles une longueur de réserve est prévue pour des réparations éventuelles, sont équipées de demi-connecteurs terminaux respectivement. Chacun de ces demi-connecteurs est reçu dans l'un des centreurs de la platine, sur la face arrière de celle-ci. Des jarretières optiques de raccordement munies à chacune de leurs extrémités d'un demi-connecteur assurent les liaisons entre fibres optiques et équipements opto-électroniques. L'un de leurs demi-connecteurs est reçu dans l'un des centreurs de la platine, sur sa face avant ; l'autre par le centreur de raccordement de l'équipement concerné.

Ce mode de distribution entre fibres optiques du câble de ligne et les équipements présente de nombreux inconvénients. Parmi ces inconvénients, on peut citer :

- le rangement désordonné des longueurs de réserve sur les fibres optiques, dans le bâti,

- le débordement des jarretières de raccordement sur la face avant du bâti, dû en particulier aux rayons de courbure à respecter, et la gêne résultante pour les exploitants en particulier lorsque deux bâtis sont en vis-à-vis,

- la difficulté des répartitions des fibres, et de leurs réparations à l'arrière de la platine montée fixe sur le bâti,

- les risques d'accidents visuels pour les exploitants au cours de manipulations des jarretières de raccordement, par la lumière émise par les fibres connectées à leurs centreurs sur la platine et se propageant perpendiculairement depuis la face avant de cette platine,

- le manque d'adaptation possible en regard de l'évolution de capacité des systèmes de transmission actuels et de celle relative à la constitution des câbles de ligne, qui imposent l'implantation des équipements opto-électroniques dans plusieurs bâtis et le transfert de manière correspondante des fibres du câble de ligne vers ces différents bâtis, avec réalisation d'épissures entre fibres ayant des destinations ou des provenances différentes.

La présente invention a pour but un dispositif de tête de câble, sous forme de châssis, palliant les inconvénients ci-avant.

La présente invention a pour objet un châssis de tête de câbles optiques, de forme sensiblement parallélépipédique, équipé d'au moins un accès de câble, au niveau duquel chaque câble qu'il reçoit est éclaté en ses éléments optiques constitutifs, et comportant une pluralité d'éléments optiques de raccordement entre des fibres individuelles issues de l'éclatement d'au moins l'un des câbles et des éléments optiques de liaison avec des équipements opto-électroniques extérieurs et des moyens de lovage pour au moins les fibres à raccorder, caractérisé en ce qu'il est formé par une partie arrière et une partie avant montée articulée sur la partie arrière, dont les volumes internes communiquent l'un avec l'autre, et en ce que ladite partie avant porte lesdits éléments optiques de raccordement montés en au moins une rangée selon la hauteur du châssis et pour assurer individuellement une transmission de flux optique parallèlement à sa face avant et que ladite partie arrière est équipée de moyens de distribution de l'ensemble desdits éléments constitutifs de chaque câble, vers ladite partie avant et sous forme de fibres individuelles à raccorder aux éléments de liaison par lesdits éléments de raccordement, pour ceux concernés d'entre eux, et vers l'extérieur du châssis, pour les autres.

Le châssis selon l'invention comporte, en outre, une pluralité de supports de stockage de réserve de longueur de fibres montés dans ladite partie avant et affectés individuellement aux fibres reçues par lesdits éléments optiques de raccordement.

Selon une autre caractéristique, lesdits éléments optiques de raccordement et lesdits supports de stockage de réserve de longueur sont répartis sur au moins une réglette de maintien s'étendant entre les faces supérieure et inférieure de la partie avant et sensiblement dans le plan de sa face avant.

Selon une autre caractéristique de l'invention, la partie avant présente une échancrure sur l'avant d'au moins l'une de ses faces latérales, servant de passage pour lesdits éléments optiques de liaison. Avantageusement, cette partie avant est constituée par deux compartiments identiques l'un à l'autre, chacun articulé sur le bord latéral avant correspondant de la partie arrière.

Le châssis présente en outre deux flasques latéraux en U sur les parois latérales de ladite partie arrière, assurant la fixation du châssis sur des montants de bâti, en rendant fixe ladite partie arrière et en définissant des goulottes latérales de passage pour les câbles optiques.

Les avantages et caractéristiques de l'invention apparaîtront au cours de la description donnée ci-après d'un mode de réalisation illustré à titre d'exemple dans le dessin ci-annexé. Dans ce dessin :

- la figure 1 est une vue de dessus d'un châssis selon l'invention monté dans un bâti,

- la figure 2 est une vue schématisée en perspective du châssis selon la figure 1 présenté également monté dans un bâti mais avec certains de ses éléments enlevés,

- la figure 3 est une vue partielle en perspective donnée à échelle agrandie de l'un de ses éléments.

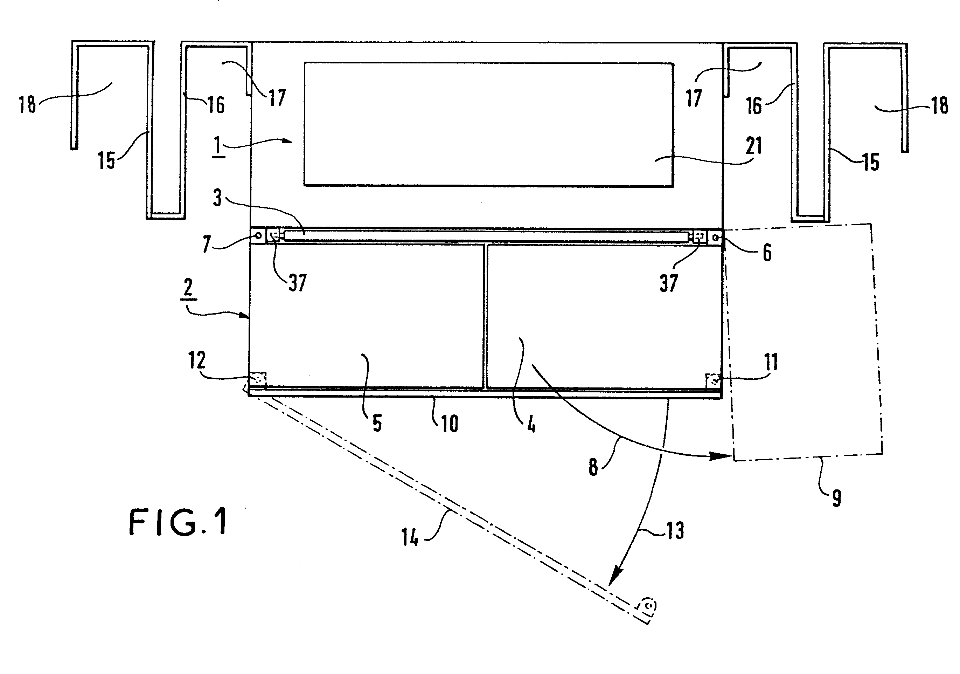

A partir de la figure 1, on voit que le châssis est de forme générale parallélépipédique. Il est, selon sa profondeur, constitué en deux parties, l'une dite arrière 1 et l'autre dite avant 2. Ces deux parties sont ouvertes sur leur face interne au châssis, dite face avant pour la partie arrière 1 et dite face arrière pour la partie avant 2. Une tablette 3 s'intercale entre les deux parties 1 et 2.

La partie avant 2 est elle-même constituée de deux compartiments 4 et 5, identiques l'un à l'autre. Les compartiments 4 et 5 sont indépendants l'un de l'autre, chacun occupe la hauteur du châssis et sensiblement la moitié de sa largeur. Ces deux compartiments sont articulés sur la partie arrière 1, chacun sur le bord latéral correspondant de la face avant de la partie arrière ainsi que schématisé en 6 ou 7 selon le compartiment concerné. La partie avant 2 peut ainsi s'ouvrir à la manière d'une porte à deux battants, la flèche 8 schématise le passage du compartiment 4 dans une position d'ouverture montrée en 9 en pointillés.

Une plaque de protection 10 ferme le châssis, sur la face avant de sa partie 2. Cette plaque de protection 10 est articulée sur les bords latéraux de la face avant de cette partie 2, ainsi que schématisé en 11 ou 12 selon le bord latéral considéré. Elle peut ainsi s'ouvrir d'un côté ou de l'autre, ainsi que montré par la flèche 13 en ce qui concerne son passage dans l'une de ses deux positions d'ouverture possibles ; la plaque de protection entr'ouverte est montrée en pointillés en 14. Cette plaque de protection peut s'enlever complètement.

A partir de cette figure 1, on voit aussi que la partie arrière est la partie fixe du châssis ; elle sert à la fixation du châssis sur des montants 15 d'un bâti. Un flasque 16, rapporté sur chacune des deux parois latérales de la partie arrière, assure cette fixation. Chaque flasque 16 est de section horizontale en U dont la partie terminale de l'un des jambages est tronquée et l'extrémité de l'autre rabattue à 90° sur une courte longueur vers l'extérieur.

Le jambage tronqué du U de section de chaque flasque 16 est soudé à l'une ou l'autre des parois latérales, la base du U étant sensiblement dans le plan de la face arrière de la partie 1. Le rabat extérieur de l'autre jambage du U de section est fixé sur le montant 15 correspondant du bâti. Chaque flasque 16 délimite, avec la face latérale de la partie arrière sur laquelle il est rapporté, une goulotte 17 affectée au passage de câbles optiques de ligne. Chaque montant 15, également de section en U, définit intérieurement une autre goulotte 18, qui peut être affectée au passage d'éléments optiques de liaison entre fibres issues de câbles et des équipements opto-électroniques montés dans le bâti.

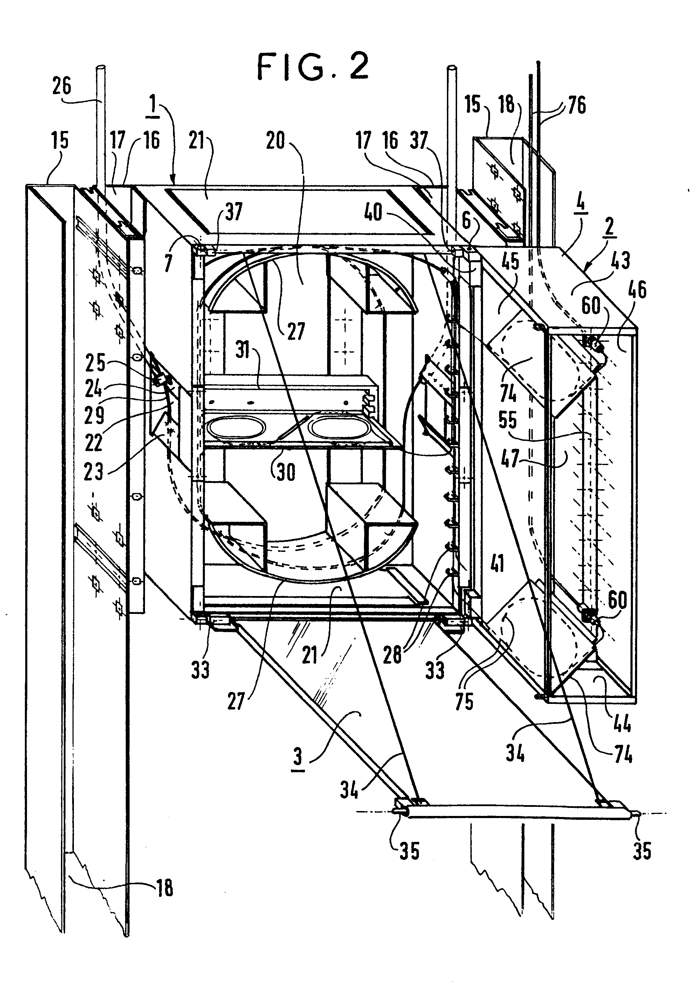

Dans la figure 2, on a représenté ce châssis ouvert, la plaque de protection avant et le compartiment gauche de la partie avant ayant été enlevés pour montrer l'agencement interne. Dans cette figure 2, les éléments du châssis sont désignés par les mêmes références que dans la figure 1.

Dans cette figure 2, on voit que la partie arrière 1 est constituée par cinq plaques à bords rabattus soudés entre eux par points. Les bords avants rabattus des deux plaques latérales et des deux plaques inférieure et supérieure délimitent la face avant ouverte 20 de cette partie arrière. Dans l'une et l'autre des plaques inférieure et supérieure est aménagée une ouverture rectangulaire, non référencée, chacune de ces ouvertures est présentée obturée par un cache amovible 21. Un tel cache est avantageusement formé, par une simple plaque mise en place dans un chemin de glissement formé par un cambrage convenable des bords latéraux de l'ouverture. Dans chacune des deux parois latérales de la partie arrière du châssis, sensiblement à mi-hauteur et à mi-largeur de chacune d'elles, est prévue une ouverture 22 définie entre deux languettes rectangulaires 23 et 24, issues de crevage. Ces languettes sont inclinées symétriquement l'une par rapport à l'autre et dirigées vers l'intérieur de la partie arrière 1. Ces deux languettes 23 et 24 servent de support à des colliers 25 de passage des fibres individuelles gainées ou des joncs issus de l'éclatement des câbles optiques de ligne, tels 26, en leurs éléments optiques constitutifs 29, que ces câbles de ligne, acheminés dans les goulottes latérales 17, parviennent jusqu'à l'ouverture 22 correspondante depuis le haut ou le bas du bâti.

Le volume intérieur de la partie arrière 1 est affecté en ce qui concerne sa partie périphérique au lovage des éléments constitutifs 29 des câbles de ligne, sous forme de fibres individuelles gainées ou sous forme de joncs, pour constituer des longueurs de réserve.

Deux voûtes 27, fixées sur la plaque arrière, ayant leur surface convexe tournée vers la plaque inférieure ou supérieure, selon le cas, et à faible distance de cette plaque, et s'étendant jusqu'au voisinage des plaques latérales, définissent le chemin de lovage. Deux rangées de crochets ou attaches 28 sont prévues sur les deux parois latérales respectivement et au voisinage de la face avant ouverte 20 pour guider, à la sortie de ce chemin de lovage, les fibres individuelles formant les éléments constitutifs,29, des câbles ou issues de l'éclatement des joncs formant ces éléments 29 et permettre une distribution ordonnée de ces fibres dans le châssis.

La partie centrale du volume intérieur, entre les deux voûtes, est réservée à des boîtes d'épissurage individuelles ou collectives 30 venant se monter sur un support 31 fixé sur la plaque arrière. Les boîtes individuelles se présentent par exemple sous forme de cassettes individuelles plates et sont glissées dans le support présentant des rainures de réception des cassettes. Elles reçoivent les fibres à raccorder appartenant à deux câbles, les fibres à traiter dans une cassette étant déviées des chemins de guidage que forment les rangées d'attaches 28 au niveau des deux attaches latérales qui correspondent sensiblement à cette cassette.

A l'avant de la partie arrière, la tablette 3 est montée rabattable pour servir, ainsi qu'illustré, de table de travail lors de petites interventions. Cette tablette est articulée sur les extrémités du bord avant inférieur de la partie 1, par des charnières 33. Elle est maintenue en position horizontale par deux cordons souples 34 accrochés entre le bord avant supérieur de la partie 1 et l'extrémité correspondante de la tablette. Elle ferme pratiquement la partie arrière en se verrouillant sur son bord avant supérieur ; à cet effet, deux verrous escamotables 35 portés par la tablette viennent s'encliqueter dans des logements de supports d'accrochage 37 prévus aux extrémités du bord avant supérieur de la partie 1. La tablette est légèrement moins large que la partie arrière ; en position fermée elle laisse donc deux jours latéraux entre elle et les bords avants latéraux de la partie arrière, devant l'une et l'autre des deux rangées d'attaches 28. Ces attaches 28 permettront alors, à travers ces jours, la distribution ordonnée de fibres entre les parties avant et arrière du châssis.

Dans cette même figure 2, on a aussi illustré, en position ouverte, le compartiment de droite 4 de la partie avant. Le deuxième compartiment qui a été enlevé lui est identique. Chacun de ces compartiments pivote autour de deux charnières, telles que 40, 41 en ce qui concerne le compartiment 4, montées entre l'un ou l'autre des bords latéraux avants de la partie arrière 1, selon le compartiment concerné, et le bord latéral arrière correspondant de la partie avant 2. Les charnières 40, 41 définissent l'articulation 6 de la figure 1. Les deux compartiments étant mis en position ouverte et la tablette 3 en position horizontale de travail, la partie arrière 1 se trouve entièrement découverte à l'avant et ainsi rendue accessible.

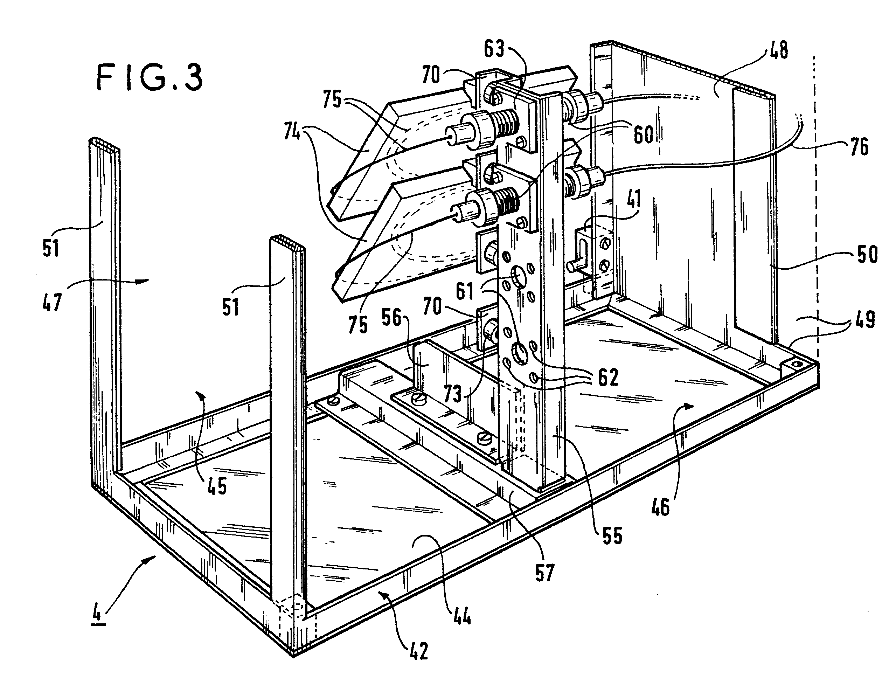

La description du compartiment 4 est donnée en se référant à cette figure 2 mais également à la figure 3.

Le compartiment 4 occupe la hauteur du châssis et a légèrement moins que la moitié de sa largeur. Il a ses faces supérieure et inférieure 43 et 44 fermées, elles sont constituées chacune par une plaque montée sur un cadre 42 dont les branches sont de section en L. Sa face arrière 45, venant en vis-à-vis de la tablette 3 lorsque le compartiment est fermé, et sa face avant opposée 46 sont ouvertes. Sa face latérale intérieure 47, s'étendant à l'avant de la tablette 3 à mi-largeur de celle-ci lorsque le compartiment est fermé, est également ouverte. Sa face latérale extérieure 48, opposée à la face 47 est pratiquement fermée ; elle laisse sur sa partie avant, sur toute sa hauteur, une échancrure 49. La plaque qui définit la partie fermée de la face latérale 48 a son bord vertical avant 50 replié à l'anglaise vers l'intérieur du compartiment, le long de l'échancrure 49 ; son bord vertical arrière est replié à angle droit. Deux montants 51 forment les arêtes entre la face latérale intérieure et les faces avant et arrière ; ils délimitent les faces ouvertes du compartiment, et assurent la rigidité du compartiment.

Le compartiment 4 comporte une réglette verticale 55 montée entre les bords avants rabattus de ses faces supérieure et inférieure, sensiblement selon l'axe médian de la face avant 46. Cette réglette a en section horizontale la forme générale d'un U, dont l'ouverture est tournée vers l'une des faces latérales du compartiment, ici la face latérale extérieure 48. La réglette est en léger retrait sur la face avant 46, vers l'intérieur du compartiment.

A chacune des extrémités de la réglette, une patte 56, solidaire de la branche du U de section la plus intérieure dans le compartiment, permet d'assurer sa fixation, par vis, sur la plaque de la face supérieure ou inférieure correspondante. Une contre-cornière 57 montée sur cette plaque de la face supérieure ou inférieure entre les bords avant et arrière du cadre 42 de la face considérée, coopère au bon maintien de la réglette 55.

Particulièrement en regard de la figure 3, on voit que, dans ce compartiment 4, la réglette 55 constitue en premier lieu un support pour une rangée verticale de centreurs optiques tels que 60 de type connu. La réglette 55 présente à cet effet, une rangée de trous 61 régulièrement répartis sensiblement sur toute sa hauteur. Ces trous 61 sont formés sur la base de sa section en U ; ils sont destinés à recevoir chacun un centreur. De petits perçages 62 à la périphérie de chaque trou, sur la base du U, permettent le montage convenable de chaque centreur, en jouant éventuellement le rôle de détrompeurs, et permettent aussi leur fixation.

Les centreurs 60 sont individuellement montés horizontalement sur la réglette, les deux embouts de raccordement que présente chacun d'eux s'étendant horizontalement de part et d'autre de la base du U de section. Une collerette intermédiaire 63 sur chaque centreur, formant embase d'appui sur la base du U de section, permet le montage convenable de chaque centreur dans le trou 61 qui le reçoit ; elle permet aussi sa fixation, par vis bloquées à travers tout ou partie des perçages 62, sur la réglette 55.

Cette réglette 55 comporte, en outre, une rangée de doigts 70 attenants à la branche du U de section la plus intérieure dans le compartiment. Ces doigts 70 sont affectés individuellement aux différentes fibres reçues de la partie arrière 1 qui sont à connecter aux centreurs optiques 60 ; ils sont, comme les centreurs, répartis sur la hauteur de la réglette et entre eux au même pas que les centreurs. Chacun d'eux sert à supporter une certaine réserve de longueur sur la fibre raccordée ou à raccorder dans le centreur optique sensiblement de même niveau.

Chaque doigt 70 est profilé en L. L'une des branches du L sert d'attache sur l'extrémité de la branche de le section en U la plus intérieure dans le compartiment. L'autre branche du L est retournée vers la base de la section en U ; elle présente un canon de passage 73, permettant l'accrochage d'un support 74 de stokage de réserve de longueur de fibre individuelle, telle que 75, par un élément de retenue non référencé engagé et bloqué dans ce passage.

Avantageusement, les supports 74 montés sur les différents doigts sont légèrement inclinés sur l'horizontale, pour une facilité de préhension et de dégagement de chacun d'eux ; ils peuvent être souples ou rigides.

A partir de la figure 2, bien que celle-ci ne montre que l'un des deux compartiments de la partie avant, on comprend aisément que le châssis complet porte deux rangées de centreurs optiques 60 et deux rangées de supports 74 de stockage de réserve de longueur de fibre optique individuelle associés. Les centreurs de chaque rangée reçoivent par enfichage, dans leurs embouts de raccordement respectifs situés en regard de la face latérale interne du compartiment concerné, les embouts terminaux de raccordement complémentaires, de type connu, qui équipent les fibres individuelles 75 reçues de la partie arrière et dont une certaine réserve de longueur est constituée dans les différents supports de stockage correspondant aux centreurs. Ils reçoivent, également par enfichage, dans leurs embouts de raccordement respectifs situés en regard de la face latérale externe du compartiment concerné, les embouts terminaux de raccordement complémentaires de jarretières optiques 76, de type connu.

Ces jarretières 76 assurent les liaisons entre les différentes fibres individuelles et des équipements opto-électroniques du bâti non représentés, par les centreurs, dans l'un ou l'autre des deux sens de transmission possibles. Elles sortent du compartiment où elles sont raccordées aux centreurs par l'échancrure 49, à l'avant de la face latérale externe de ce compartiment ; elles sont ensuite acheminées, à l'intérieur du montant de bâti 15 correspondant, dans la goulotte 18, jusqu'à ces équipements opto-électroniques auxquels elles sont raccordées.

Selon le sens de transmission des signaux optiques, vers ou en provenance d'équipements opto-électroniques, les fibres individuelles traitées dans la partie avant du châssis sont émettrices ou réceptrices. Dans cette partie avant du châssis, l'une des deux rangées de centreurs peut être affectée aux fibres émettrices et l'autre aux fibres réceptrices.

En exploitation, le châssis selon l'invention prend place dans un bâti recevant également les équipements opto-électroniques convenables. Plusieurs de ces châssis, jusqu'à concurrence de six compte-tenu de la hauteur normalisée des bâtis actuels, peuvent être associés dans le même bâti ; leurs goulottes 17 de passage des câbles de ligne s'aboutent sur tout ou partie de la hauteur du bâti.

Les centreurs de chaque châssis de tête de câble disposés parallèlement à la face avant du compartiment qui les porte transmettent le flux lumineux qu'ils reçoivent des fibres ou des jarretières sans risque d'agression visuelle de l'opérateur. Cette disposition minimise aussi tout risque de même nature lors d'interventions à leur niveau.

Le châssis selon l'invention permet de traiter les fibres gainées individuellement ou les joncs du câble de ligne d'arrivée comme de départ qu'il reçoit. Après éclatement du câble en ses fibres gainées individuelles (ou en ses joncs), celles-ci sont séparées selon qu'elles sont traitées dans ce châssis, dans un autre châssis du même bâti ou dans un châssis d'un autre bâti.

Les fibres (ou joncs) traitées dans le châssis sont lovées ensemble dans la partie arrière entre les deux voûtes, sur une longueur de quelques mètres puis distribuées à niveaux convenables par les attaches latérales vers le différent centreurs, à travers les supports de lovage individuels pour ces fibres (les joncs après lovage sur les voûtes étant éclatés en fibres individuelles regainées). Ces fibres individuelles, chacune équipée de leur embout de raccordement, sont connectées aux centreurs respectifs correspondants.

Les fibres (ou joncs) non traitées dans ce châssis mais à traiter dans un autre châssis du même bâti, sont directement dirigées vers cet autre châssis, sans lovage dans la partie arrière du premier châssis considéré. Les ouvertures dans les plaques inférieures et supérieures des châssis, dont les caches d'obturation 21 sont enlevés, pour celles convenables , permettent le passage de ces fibres dans le châssis qui doit les traiter.

Les fibres (ou joncs) non traitées dans le châssis de réception du câble de ligne mais à traiter dans un châssis d'un autre bâti que celui du châssis de réception, sont lovées ensemble dans la partie arrière du châssis de réception puis raccordées dans ses boîtes d'épissurage à autant d'autres fibres (joncs), issus du même chemin de lovage, qui appartiennent à un nouveau câble partant de ce châssis de réception. Ce nouveau câble acheminé par les goulottes 17 des châssis concernés vaut câble de ligne pour le châssis devant traiter les fibres. Le châssis de réception initial joue ainsi, par ses boîtes d'épissurage, le rôle de relais pour ces fibres.

Dans une station de télécomminications, ces châssis de tête de câbles optiques montés à un ou plusieurs par bâti de la station permettent donc de réaliser :
- la distribution, par l'intermédiaire de jarretières, des signaux vers ou en provenance des équipements opto-électronique du bâti considéré,
- la distribution de fibres optiques ou joncs entre châssis du même bâti,
- la distribution de fibres optiques ou joncs entre châssis de bâtis différents.

Les longueurs de réserve réalisées, tant dans la partie arrière que dans la partie avant de chaque châssis, autorisent des interventions possibles sur tout ou partie des fibres issues du câble de ligne, pour les adaptations des réseaux de distribution existants ou d'éventuelles réparations.

La présente invention a été décrite en regard du mode de réalisation donné à titre d'exemple dans le dessin joint. Il est évident que l'on peut y apporter des modifications de détail ou remplacer certains moyens par d'autres équivalents sans sortir du cadre de l'invention. En particulier, les centreurs avec leurs embouts de part et d'autre de la réglette peuvent être remplacés, dans un souci de diminution de l'affaiblissement d'une liaison, par d'autres moyens optiques de raccordement entre les fibres individuelles et les jarretières, par exemple, par des boîtes individuelles d'épissurage adaptables sur les réglettes.

Par ailleurs, il est bien évident que si l'on souhaite au contraire introduire un affaiblissement supplémentaire défini sur une liaison, cet affaiblissement supplémentaire pourra être obtenu en utilisant un demi-connecteur atténuateur pour l'un des deux embouts de raccordement destinés à être enfichés dans les deux embouts de raccordement du centreur de la régette affecté à cette liaison.

On notera encore qu'une fibre reliée par l'intermédiaire d'un centreur à une jarretière, peut être dirigée vers une boîte d'épissurage de la partie arrière du châssis, pour être dirigée vers un autre châssis.

0226605

REVENDICATIONS

1/ Châssis de tête de câbles optiques, de forme sensiblement parallélépipédique, équipé d'au moins un accès de câble (22), au niveau duquel chaque câble qu'il reçoit est éclaté en ses éléments optiques constitutifs, et comportant une pluralité d'éléments optiques de raccordement entre des fibres individuelles issues de l'éclatement d'au moins l'un des câbles et des éléments optiques de liaison avec des équipements opto-électroniques extérieurs et des moyens de lovage pour au moins les fibres à raccorder, caractérisé en ce qu'il est formé par une partie arrière (1) et une partie avant (2) montée articulée sur la partie arrière, dont les volumes internes communiquent l'un avec l'autre, et en ce que ladite partie avant (2) porte lesdits éléments optiques de raccordement (60) montés en au moins une rangée selon la hauteur du châssis et pour assurer individuellement une transmission de flux optique parallèlement à sa face avant et que ladite partie arrière (1) est équipée de moyens de distribution (21, 27, 28, 30) de l'ensemble desdits éléments constitutifs de chaque câble, vers ladite partie avant (2) et sous forme de fibres individuelles (75) à raccorder aux éléments de liaison (76) par lesdits éléments de raccordement (60), pour ceux concernés d'entre eux, et vers l'extérieur du châssis, pour les autres.

2/ Châssis selon la revendication 1, caractérisé en ce que lesdits moyens de lovage comportent une pluralité de supports (74) de stockage de réserve de longueur de fibres montés dans ladite partie avant (2) et affectés individuellement aux fibres (75) reçues par les éléments optiques de raccordement (60).

3/ Châssis selon la revendication 2, caractérisé en ce que lesdits éléments optiques de raccordement (60) et lesdits supports (74) de stockage de réserve de longueur sont montés sur au moins une réglette de maintien (55) s'étendant sensiblement sur la hauteur et dans le plan de la face avant (46) de ladite partie avant (2).

4/ Châssis selon la revendication 3, caractérisé en ce que ladite réglette (55) a en section droite la forme générale d'un U dont les branches sont parallèles à la face avant de ladite partie avant, dans la base duquel sont montés transversalement lesdits éléments optiques de raccordement (60) constitués par des centreurs optiques ayant deux embouts de raccordement de part et d'autre de la base du U de section.

5/ Châssis selon la revendication 4, caractérisé en ce que ladite réglette (55) présente en outre une rangée de doigts (70) attenants à la branche du U de section de la réglette, la plus intérieure.dans la partie avant (2), correspondant sensiblement en niveau aux différents centreurs sur la réglette, servant de supports d'accrochage desdits supports (74) de réserve de longueur de fibres individuelles.

6/ Châssis selon la revendication 5, caractérisé en ce que ladite partie avant (2) présente une échancrure (49) sur l'avant d'au moins l'une de ses faces latérales, servant de passage pour lesdits éléments optiques de liaison (76).

7/ Châssis selon l'une des revendications 1 à 6, caractérisé en ce que ladite partie avant est constituée en deux compartiments (4, 5) identiques l'un à l'autre, chacun sensiblement de largeur moitié de celle du châssis et chacun articulé latéralement sur la partie arrière (1).

8/ Châssis selon la revendication 1 à 7, caractérisé en ce qu'il comporte, entre ladite partie avant (2) et ladite partie arrière (1), une tablette (3) rabattable en position horizontale et susceptible de fermer la face avant de la partie arrière en laissant deux jours latéraux de communication entre les parties avant et arrière.

9/ Châssis selon l'une des revendications 1 à 8, caractérisé en ce que ladite partie arrière (1) comporte des moyens de lovage (27) de l'ensemble des éléments constitutifs de chaque câble, sensiblement selon la périphérie de son volume interne.

10/ Châssis selon la revendication 9, caractérisé en ce que ladite partie arrière comporte des boîtes d'épissurage (30) montées, dans la partie centrale de son volume interne, sur un support (31) fixé sur sa face arrière.

11/ Châssis selon l'une des revendications 1 à 10, caractérisé en ce que ladite partie arrière porte extérieurement, sur ses faces latérales, deux flasques (16) profilés en U à base sensiblement dans le plan de sa face arrière, servant à la fixation du châssis sur deux montants de bâti (15), par ladite partie arrière, et définissant dans chaque profilé en U, une goulotte (17) pour le passage des câbles optiques.

0226805

FIG.1

FIG. 2

0226805

FIG.3

3/3

0226805

Office européen
des brevets

**RAPPORT DE RECHERCHE EUROPEENNE**

**0226805**
Numéro de la demande

EP 86 11 5794

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| Y | FR-A-2 559 277 (H. POUYET) <br> * Revendications; figures * | 1 | G 02 B 6/44 |
| A | | 2-4 | |
| | --- | | |
| Y | FR-A-2 515 466 (L.T.T.) <br> * Revendications; figures * | 1 | |
| A | | 2,3 | |
| | --- | | |
| A | DE-A-3 116 869 (SIEMENS AG) <br> * Résumé * | 1 | |
| | --- | | |
| A | EP-A-0 149 250 (W. SEDLBAUER GmbH) <br> * Résumé * | 1 | **DOMAINES TECHNIQUES RECHERCHES (Int. Cl.4)** |
| | --- | | |
| P,A | EP-A-0 186 579 (J.E. NOZICK) <br> * Résumé * | 1 | G 02 B |
| | ----- | | |

Le present rapport de recherche a été etabli pour toutes les revendications

| Lieu de la recherche | Date d'achèvement de la recherche | Examinateur |
|---|---|---|
| LA HAYE | 09-02-1987 | PFAHLER R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82